# EUROPEAN PATENT APPLICATION

(11) **EP 3 885 252 A1**
(43) Date of publication of application: **29.09.2021**
(21) Application number: 21153790.7
(22) Date of filing: 27.01.2021
(51) Int. Cl.: B64C 11/00, B64C 23/00, B64C 29/00, B64C 3/14

(54) **WING AND AIRCRAFT**

(30) Priority: 25.03.2020 JP 2020053990
(71) Applicant: Mitsubishi Heavy Industries, Ltd., Chiyoda-ku, Tokyo 1008332 (JP)
(72) Inventor: MORISAKI, Yuki, Tokyo 1008332 (JP); KARIKOMI, Kai, Tokyo 1008332 (JP); IMAI, Kazuhiro, Tokyo 1008332 (JP); SAIKI, Yasuhiro, Tokyo 1008332 (JP)
(74) Representative: Studio Torta S.p.A.

(57) **Abstract**

Object

Provided are a wing and an aircraft that can prevent the passage of air between a wing upper surface and a wing lower surface without increasing weight, and suppress deterioration of performance of the wing body.

Solving Means

Provided are a wing body 20 configured to include a housing section 21 that penetrates in a wing thickness direction between a leading edge 22a and a trailing edge 22b; a lift fan 40 provided inside the housing section 21 and configured to generate an airflow in the wing thickness direction; and a thrust fan 50 provided at the leading edge 22a of the wing body 20 and configured to generate an airflow from the leading edge 22a toward the trailing edge 22b on a wing upper surface 23a and a wing lower surface 23b of the wing body 20.

## Description

### Technical Field

The present disclosure relates to a blade and an aircraft.

### Background Art

In recent years, development in the motorization of aircraft has been actively carried out in order to improve the performance of power electronics, and one said development is a vertical take-off & landing (VTOL) type aircraft.

The type of airframe used in an electric VTOL aircraft varies depending on requirements such as cruise speed, cruise range, and payload. For example, in a case where a fast cruise speed or a long cruise range is required, a tiltwing aircraft or a tiltrotor aircraft having a main wing is often employed.

However, when the main wing or the rotor is tilted (inclined), stable control of the flight becomes difficult. Thus, in a case where the cruise speed is slow and the cruise range is short, a fixed-rotor aircraft is often employed.

In recent years, there has been an increase in the need for long distance transport, and the need for tiltwing aircraft or tiltrotor aircraft using a dispersion fan is expected to increase by taking advantage of motorization in the future.

However, the mechanism for tilting a main wing and a rotor increases the weight of the airframe, and as a result, there have been problems such as increased power consumption or reduced flight stability. Therefore, for example, employing a VTOL aircraft (so-called compound aircraft) in which a lift fan and a thrust fan are separately mounted as disclosed in Patent Literature 1 has been considered.

### Citation List

### Patent Literature

Patent Literature 1: US 2019/0,291,860 A

### Summary of Invention

### Technical Problem

In a configuration where the lift fan and the thrust fan are mounted separately, only the thrust fan is used while cruising, which is the period not including takeoff and landing, and thus, the lift fan acts as a drag element that inhibits the flow of air.

In addition, as in the VTOL aircraft disclosed in Patent Literature 1, even in a configuration in which the thrust fan is provided at the trailing edge of the main wing and the lift fan is housed inside the main wing, the space in which the lift fan is housed causes a blade upper surface and a blade lower surface to communicate with each other and allow air to pass through, and there is a possibility that the performance as a blade deteriorates. In contrast, Patent Literature 1 also discloses a louver that covers the housing space of the lift fan, but the louver and a mechanism for opening and closing the louver increase the weight of the airframe. As a result, there is a problem such as increase in power consumption or deterioration of flight stability.

In view of such circumstances, an object of the present disclosure is to provide a blade and an aircraft capable of preventing the passage of air between a blade upper surface and a blade lower surface without increasing weight, to thereby suppress deterioration of performance of the blade body.

### Solution to Problem

From the viewpoint of solving the above-described problem, the blade and the aircraft of the present disclosure adopt the following technique.

That is, according to one aspect of the present disclosure, there is provided a blade including: a blade body configured to include a housing section that penetrates in a blade thickness direction between a leading edge and a trailing edge; a lift fan that is provided inside the housing section and is configured to generate an airflow in the blade thickness direction; and a thrust fan that is provided at the leading edge of the blade body and is configured to generate an airflow from the leading edge toward the trailing edge on a blade upper surface and a blade lower surface of the blade body.

In addition, an aircraft according to another aspect of the present disclosure includes the above-described blade.

### Advantageous Effects of Invention

According to the blade and the aircraft of the present disclosure, it is possible to prevent the passage of air between the blade upper surface and the blade lower surface without increasing weight, and suppress deterioration of performance of the blade body.

### Brief Description of Drawings

FIG. 1 is a perspective view of an aircraft including blades according to an embodiment of the present disclosure.
FIG. 2 is a cross-sectional view of a blade along the line II-II of FIG. 1.
FIG. 3 is a plan view of the blade viewed from the arrow A illustrated in FIG. 1.
FIG. 4 is a view illustrating a flow of air along a blade upper surface and a blade lower surface.
FIG. 5 is a view illustrating the flow of air in an upper leading edge flow path, a lower leading edge flow path, and a trailing edge flow path.
FIG. 6 is a cross-sectional view of a blade along the line II-II (refer to FIG. 1) according to a modified example.

### Description of Embodiments

Hereinafter, a blade and an aircraft according to an embodiment of the present disclosure will be described with reference to the drawings.

### Configuration of Blade

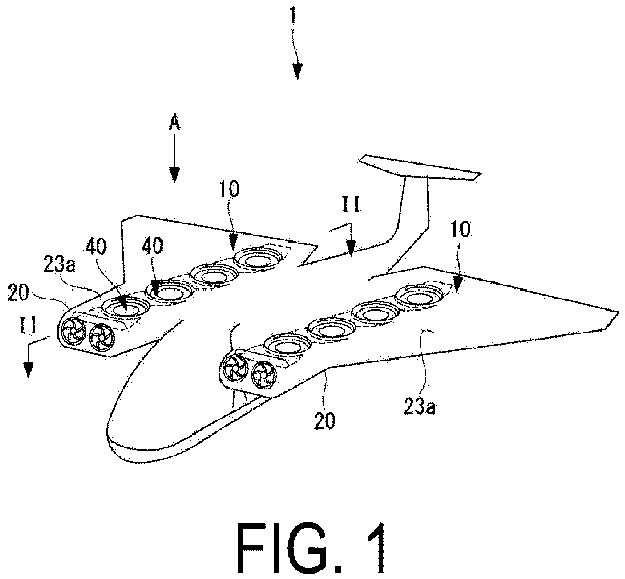

An outline of a configuration of a blade 10 will be described below with reference to FIGS. 1 to 3.

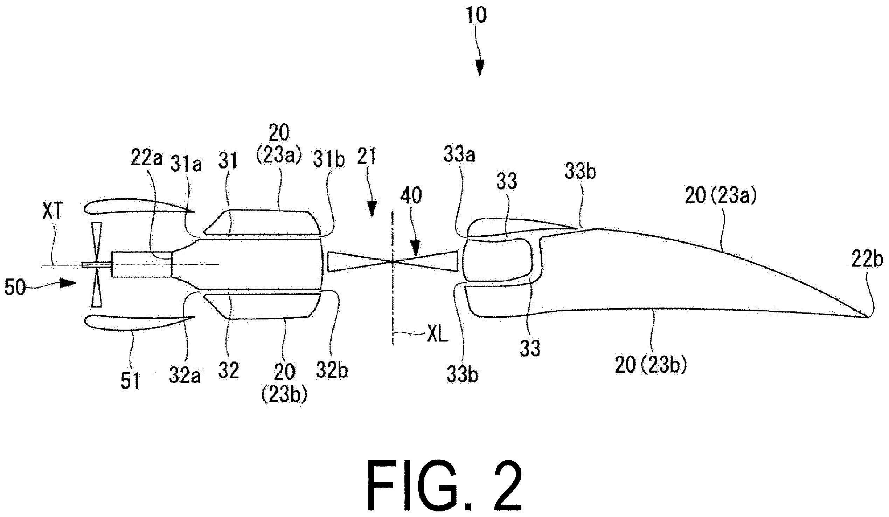

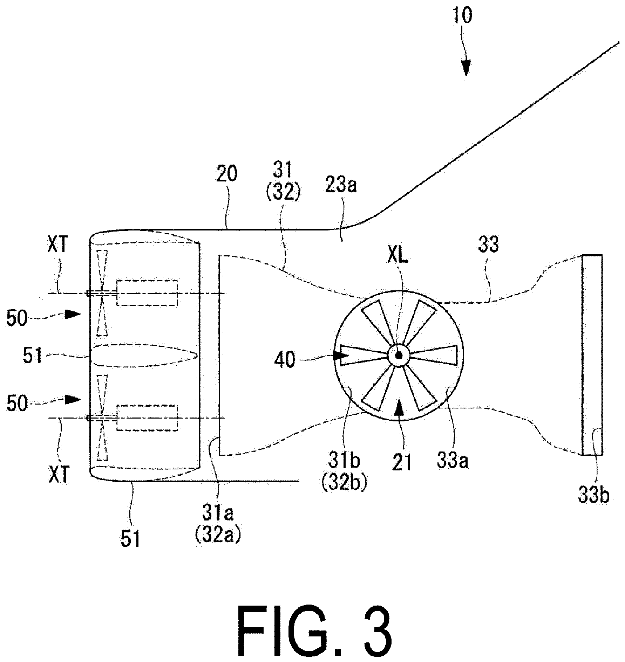

FIG. 1 is a perspective view of an aircraft 1 including the blades 10. FIG. 2 is a cross-sectional view of the blade 10 along the line II-II of FIG. 1. FIG. 3 is a plan view of the blade 10 viewed from the arrow A illustrated in FIG. 1.

As illustrated in FIG. 1, the aircraft 1 is a VTOL aircraft (a so-called compound aircraft) with an airframe in which a lift fan and a thrust fan are separately mounted. Each blade 10 is preferably employed in the blade structure of the aircraft 1.

Hereinafter, the configuration of the blade 10 will be described in detail, but for ease of description, first, a case where one lift fan 40 is provided on one of the blades 10 will be described as an example. However, actually, as illustrated in FIG. 1, a plurality of lift fans 40 may be provided along the chord direction.

As illustrated in FIG. 2, each blade 10 includes a blade body 20, the lift fan 40, and a thrust fan 50.

The blade body 20 is a known blade type in which the blade thickness changes from a leading edge 22a toward a trailing edge 22b. In the blade body 20, a housing section 21 is formed between the leading edge 22a and the trailing edge 22b.

The housing section 21 is a space that penetrates from a blade upper surface 23a to a blade lower surface 23b in the blade thickness direction. As illustrated in FIG. 3, the housing section 21 is a cylindrical space. As illustrated in FIGS. 2 and 3, the lift fan 40 is housed in the housing section 21.

As illustrated in FIG. 2, the lift fan 40 is a fan that rotates about an axis XL and generates an airflow in the blade thickness direction. The lift fan 40 is mainly used for takeoff and landing (ascending/descending) of the aircraft 1. The lift fan 40 is driven by an electric motor, for example.

The direction of the axis XL of the lift fan 40 substantially matches the blade thickness direction of the blade body 20 (that is, the penetrating direction of the housing section 21).

The lift fan 40 is fully housed in the housing section 21 and does not protrude outward from the blade upper surface 23a and the blade lower surface 23b.

As illustrated in FIGS. 2 and 3, the thrust fan 50 is a fan that is provided on the leading edge 22a of the blade body 20 and rotates about an axis XT, and generates an airflow along the blade body 20. The thrust fan 50 is mainly used for cruising (propelling) of the aircraft 1. The thrust fan 50 is driven by an electric motor, for example.

The direction of the axis XT of the thrust fan 50 substantially matches the chord direction of the blade body 20 (that is, the direction from the leading edge 22a toward the trailing edge 22b). The thrust fan 50 is a so-called ducted fan provided with a duct 51. As illustrated in FIG. 2, the diameter of the thrust fan 50 is preferably approximately the same as the maximum blade thickness of the blade body 20. Accordingly, the airflow generated by the thrust fan 50 can flow to the blade body 20 side without loss.

As illustrated in FIG. 3, a plurality of thrust fans 50 may be provided in the blade width direction. Accordingly, an airflow can be generated by the thrust fan 50 in a wide range in the blade width direction.

As illustrated in FIG. 2, on the inside the blade body 20, an upper leading edge flow path 31, a lower leading edge flow path 32, and a trailing edge flow path 33 are formed.

The upper leading edge flow path 31 is a flow path that causes the leading edge 22a and the housing section 21 to communicate with each other in the blade body 20 on which the thrust fan 50 is installed. In the upper leading edge flow path 31, an opening on the leading edge 22a side is an inlet 31a, and an opening on the housing section 21 side is an outlet 31b.

The inlet 31a is located on the blade upper surface 23a side relative to the axis XT in the blade thickness direction. In addition, the outlet 31b is located on the blade upper surface 23a side relative to the lift fan 40 in the blade thickness direction. Accordingly, the air introduced from the inlet 31a is guided to the blade upper surface 23a side of the lift fan 40.

The lower leading edge flow path 32 is a flow path that causes the leading edge 22a and the housing section 21 to communicate with each other in the blade body 20 on which the thrust fan 50 is installed. In the lower leading edge flow path 32, an opening on the leading edge 22a side is an inlet 32a, and an opening on the housing section 21 side is an outlet 32b.

The inlet 32a is located on the blade lower surface 23b side relative to the axis XT in the blade thickness direction. In addition, the outlet 32b is located on the blade lower surface 23b side relative to the lift fan 40 in the blade thickness direction. Accordingly, the air introduced from the inlet 32a is guided to the blade lower surface 23b side of the lift fan 40.

The trailing edge flow path 33 is a flow path that causes the housing section 21 and the blade upper surface 23a on the trailing edge 22b side relative to the housing section 21 to communicate with each other. In the trailing edge flow path 33, an opening on the housing section 21 side is an inlet 33a, and an opening on the blade upper surface 23a side is an outlet 33b.

Two inlets 33a are located on the blade upper surface 23a side and the blade lower surface 23b side, respectively, relative to the lift fan 40 in the blade thickness direction. Meanwhile, the outlet 33b is provided only on the blade upper surface 23a side. Accordingly, after the air introduced from each of the inlets 33a has been merged in the trailing edge flow path 33, the air is guided to the blade upper surface 23a on the trailing edge 22b side relative to the housing section 21.

As illustrated in FIG. 3, the upper leading edge flow path 31, the lower leading edge flow path 32, and the trailing edge flow path 33 are formed wide in the blade width direction.

With this configuration, the upper leading edge flow path 31 and the lower leading edge flow path 32 gradually contract in a direction from the inlets 31a and 32a toward the outlets 31b and 32b. Accordingly, the flow velocity of the air from the inlets 31a and 32a toward the outlets 31b and 32b can be increased.

In addition, the trailing edge flow path 33 gradually widens in a direction from the inlet 33a toward the outlet 33b. Accordingly, the air can be blown out in a wide range in the blade width direction, and the effects of peeling suppression, which will be described later, can be achieved in a wide range in the blade width direction.

### Flow of Air

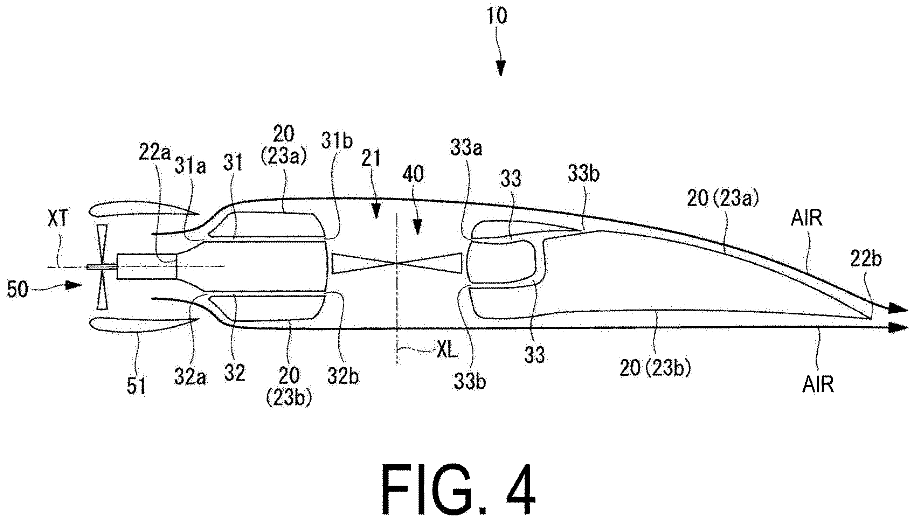

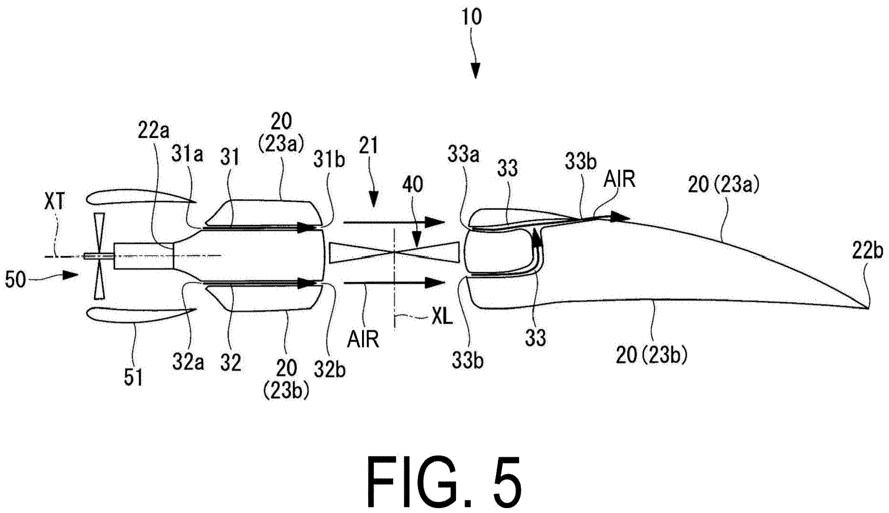

The flow of the air in the blades 10 will be described with reference to FIGS. 4 and 5.

FIG. 4 is a view illustrating the flow of air along the blade upper surface 23a and the blade lower surface 23b. FIG. 5 is a view illustrating the flow of air in the upper leading edge flow path 31, the lower leading edge flow path 32, and the trailing edge flow path 33.

As illustrated in FIG. 4, a high-speed airflow generated by the thrust fan 50 flows from the leading edge 22a of the blade body 20 along the blade upper surface 23a and the blade lower surface 23b toward the trailing edge 22b. At this time, since the thrust fan 50 includes the duct 51, the airflow is smoothly guided to the blade upper surface 23a and the blade lower surface 23b. Accordingly, the airflow (exhaust gas) of the thrust fan 50 can be used to improve the lift force generated in the blade body 20. Therefore, the lift force can be increased while the aircraft 1 is being propelled by the thrust fan 50.

The airflow flowing through the blade upper surface 23a flows so as to cover the opening on the blade upper surface 23a side of the housing section 21. In addition, the airflow flowing through the blade lower surface 23b flows so as to cover the opening on the blade lower surface 23b side of the housing section 21. Accordingly, the upper and lower surfaces of the housing section 21 are covered without providing a structural cover. Therefore, the passage of air between the blade upper surface 23a and the blade lower surface 23b via the housing section 21 can be prevented.

As illustrated in FIG. 5, a high-speed airflow generated by the thrust fan 50 is guided to the upper leading edge flow path 31 and the lower leading edge flow path 32 in addition to the blade upper surface 23a and the blade lower surface 23b.

The air introduced from the inlet 31a of the upper leading edge flow path 31 is blown out from the outlet 31b after passing through the upper leading edge flow path 31. At this time, the air introduced from the inlet 31a increases in speed due to the change in the flow path width of the upper leading edge flow path 31 (refer to FIG. 3). Since the outlet 31b is on the blade upper surface 23a side relative to the lift fan 40 in the blade thickness direction, the air blown out from the outlet 31b flows so as to cover the blade upper surface 23a side of the lift fan 40 in the housing section 21.

The air introduced from the inlet 32a of the lower leading edge flow path 32 is blown out from the outlet 32b after passing through the lower leading edge flow path 32. At this time, the air introduced from the inlet 31a increases in speed due to the change in the flow path width of the upper leading edge flow path 31 (refer to FIG. 3). Since the outlet 32b is on the blade lower surface 23b side relative to the lift fan 40 in the blade thickness direction, the air blown out from the outlet 32b flows so as to cover the blade lower surface 23b side of the lift fan 40 in the housing section 21.

Accordingly, the upper and lower portions of the lift fan 40 are covered without providing a structural cover (for example, a mechanism such as a louver). Therefore, the passage of air between the blade upper surface 23a and the blade lower surface 23b via the housing section 21 can further be prevented.

The air which is guided from the upper leading edge flow path 31 and the lower leading edge flow path 32 to the housing section 21, and covers the upper and lower portions of the lift fan 40, is guided from the two inlets 33a to the trailing edge flow path 33.

After the air introduced from the two inlets 33a is merged in the trailing edge flow path 33, the air is blown out from the outlet 33b formed in the blade upper surface 23a. The air blown out from the outlet 32b flows along the blade upper surface 23a. Accordingly, it is possible to suppress peeling on the blade upper surface 23a on the trailing edge 22b side of the blade body 20 (the trailing edge 22b side relative to the outlet 32b). At this time, the air can be blown out in a wide range in the blade width direction due to a change in the flow path width of the trailing edge flow path 33 (refer to FIG. 3), and the effect of peeling suppression can be achieved in a wide range in the blade width direction.

According to the present embodiment, the following effects are obtained.

The present embodiment provides the blade body 20 including the housing section 21 that penetrates in the blade thickness direction between the leading edge 22a and the trailing edge 22b; the lift fan 40 that is provided inside the housing section 21 and generates an airflow in the blade thickness direction; and the thrust fan 50 that is provided at the leading edge 22a of the blade body 20, and generates an airflow from the leading edge 22a toward the trailing edge 22b on the blade upper surface 23a and the blade lower surface 23b of the blade body 20. Thus, a high-speed airflow generated by the thrust fan 50 along the blade upper surface 23a and the blade lower surface 23b covers the upper and lower surfaces of the housing section 21. Therefore, the upper and lower surfaces of the housing section 21 are covered without providing a structural cover, and the passage of air between the blade upper surface 23a and the blade lower surface 23b via the housing section 21 can be prevented without increasing weight. Accordingly, it is possible to suppress deterioration of performance of the blade body 20.

In addition, a high-speed airflow generated by the thrust fan 50 passes through the blade upper surface 23a and the blade lower surface 23b to obtain a greater lift force.

Further, since the upper leading edge flow path 31 and the lower leading edge flow path 32 are formed inside the blade body, the air from the thrust fan 50 can be guided to the blade upper surface 23a side of the lift fan 40 via the upper leading edge flow path 31. Accordingly, since it is possible to cover the blade upper surface 23a side of the lift fan 40 by a high-speed airflow from the thrust fan 50 without providing a structural cover, it is possible to further prevent the passage of air between the blade upper surface 23a and the blade lower surface 23b via the housing section 21 without increasing weight. Similarly, the air from the thrust fan 50 can be guided to the blade lower surface 23b side of the lift fan 40 via the lower leading edge flow path 32. Accordingly, since it is possible to cover the blade lower surface 23b side of the lift fan 40 by using a high-speed airflow from the thrust fan 50 without providing a structural cover, the passage of air between the blade upper surface 23a and the blade lower surface 23b can further be prevented without increasing weight.

In addition, since the trailing edge flow path 33 is formed inside the blade body 20, air can be guided from the housing section 21 to the blade upper surface 23a on the trailing edge 22b side relative to the housing section 21. Accordingly, the air guided to the housing section 21 can be efficiently drawn in, and the flow of air generated on the upper and lower surfaces of the lift fan 40 in the housing section 21 can be smoothed. In addition, by guiding the air to the blade upper surface 23a, it is possible to suppress peeling on the trailing edge 22b side of the blade body 20.

### Modified Examples

In the above-described description, a case where one lift fan 40 is provided with respect to one of the blades 10 for simplicity has been described as an example, but a plurality of lift fans 40 may be provided along the chord direction.

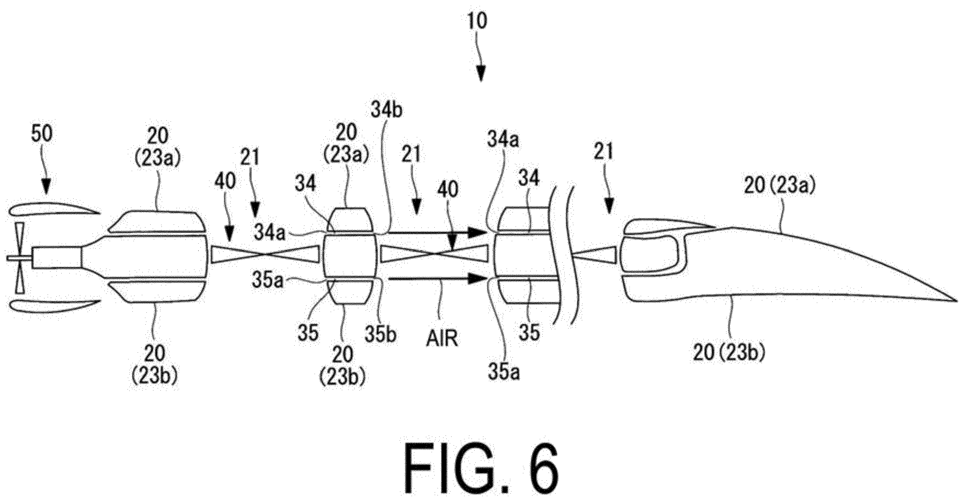

As illustrated in FIG. 6, in the blade body 20, a plurality of housing sections 21 are formed between the leading edge 22a and the trailing edge 22b along the chord direction. One lift fan 40 is housed in each of the housing sections 21.

The flow of air in the blade upper surface 23a and the blade lower surface 23b and in the upper leading edge flow path 31, the lower leading edge flow path 32, and the trailing edge flow path 33 is as described above.

On the inside of the blade body 20, an upper intermediate flow path 34 and a lower intermediate flow path 35 are formed.

The upper intermediate flow path 34 is a flow path that causes one housing section 21 and another housing section 21 to communicate with each other. In the upper intermediate flow path 34, an opening on the one housing section 21 side is an inlet 34a, and an opening on the other housing section 21 side is an outlet 34b.

The inlet 34a and the outlet 34b are located on the blade upper surface 23a side relative to the lift fan 40 in the blade thickness direction.

The lower intermediate flow path 35 is a flow path that causes one housing section 21 and another housing section 21 to communicate with each other. In the lower intermediate flow path 35, an opening on the one housing section 21 side is an inlet 35a, and an opening on the other housing section 21 side is an outlet 35b.

Note that the one housing section 21 referred to here is the housing section 21 positioned on the leading edge 22a side in the chord direction, and the other housing section 21 is the housing section 21 positioned on the trailing edge 22b side in the chord direction. In other words, in the flow direction of the airflow generated by the thrust fan 50, the upstream side is the one housing section 21, and the downstream side is the other housing section 21.

The inlet 34a and the outlet 34b are located on the blade lower surface 23b side relative to the lift fan 40 in the blade thickness direction.

The air introduced from the inlet 34a of the upper intermediate flow path 34 is blown out from the outlet 34b after passing through the upper intermediate flow path 34. The outlet 34b is located on the blade upper surface 23a side relative to the lift fan 40 in the blade thickness direction, and thus, the air blown out from the outlet 34b flows so as to cover the blade upper surface 23a side of the lift fan 40 in the other housing section 21.

The air introduced from the inlet 35a of the lower intermediate flow path 35 is blown out from the outlet 35b after passing through the lower intermediate flow path 35. Since the outlet 35b is located on the blade lower surface 23b side relative to the lift fan 40 in the blade thickness direction, the air blown out from the outlet 35b flows so as to cover the blade lower surface 23b side of the lift fan 40 in the housing section 21.

Accordingly, the upper and lower portions of the lift fan 40 housed in the other housing section 21 are covered without providing a structural cover. Therefore, the passage of air between the blade upper surface 23a and the blade lower surface 23b via the housing section 21 can further be prevented.

The blade and the aircraft according to one embodiment described above are understood, for example, as follows.

That is, the blade according to one aspect of the present disclosure includes: the blade body (20) configured to include the housing section (21) that penetrates in the blade thickness direction between the leading edge (22a) and the trailing edge (22b); the lift fan (40) provided inside the housing section (21) and configured to generate an airflow in the blade thickness direction; and the thrust fan (50) provided at the leading edge (22a) of the blade body (20) and configured to generate an airflow from the leading edge (22a) toward the trailing edge (22b) on the blade upper surface (23a) and the blade lower surface (23b) of the blade body (20).

Since the blade according to the present aspect includes the blade body (20) configured to include the housing section (21) that penetrates in the blade thickness direction between the leading edge (22a) and the trailing edge (22b); the lift fan (40) provided inside the housing section (21) and configured to generate an airflow in the blade thickness direction; and the thrust fan (50) provided at the leading edge (22a) of the blade body (20) and configured to generate an airflow from the leading edge (22a) toward the trailing edge (22b) on the blade upper surface (23a) and the blade lower surface (23b) of the blade body (20), a high-speed airflow generated by the thrust fan (50) along the blade upper surface (23a) and the blade lower surface (23b) covers the upper and lower surfaces (the blade upper surface (23a) and the blade lower surface (23b)) of the housing section (21). Therefore, the upper and lower surfaces of the housing section (21) are covered without providing a structural cover, and the passage of air between the blade upper surface (23a) and the blade lower surface (23b) via the housing section (21) can be prevented without increasing weight. Accordingly, it is possible to suppress deterioration of performance of the blade body (20).

In addition, the high-speed airflow generated by the thrust fan (50) passes through the blade surfaces to obtain a greater lift force.

Further, an electric motor is suitably used to drive the thrust fan (50) and the lift fan (40).

In the blade according to the aspect of the present disclosure, on the inside of the blade body (20), there are formed the upper leading edge flow path (31) that causes the leading edge (22a) provided with the thrust fan (50) and the housing section (21) to communicate with each other, and guides air to the blade upper surface (23a) side of the lift fan (40), and the lower leading edge flow path (32) that causes the leading edge (22a) provided with the thrust fan (50) and the housing section (21) to communicate with each other, and guides air to the blade lower surface (23b) side of the lift fan (40).

In the blade according to the present aspect, since, on the inside of the blade body (20), there are formed the upper leading edge flow path (31) that causes the leading edge (22a) provided with the thrust fan (50) and the housing section (21) to communicate with each other, and guides air to the blade upper surface (23a) side of the lift fan (40), and the lower leading edge flow path (32) that causes the leading edge (22a) provided with the thrust fan (50) and the housing section (21) to communicate with each other, and guides air to the blade lower surface (23b) side of the lift fan (40), the air from the thrust fan (50) can be guided to the blade upper surface (23a) side of the lift fan (40) via the upper leading edge flow path (31). Accordingly, since it is possible to cover the blade upper surface (23a) side of the lift fan (40) by using a high-speed airflow from the thrust fan (50) without providing a structural cover, it is possible to prevent the passage of air the blade upper surface (23a) and the blade lower surface (23b) via the housing section (21) without increasing weight. Similarly, the air from the thrust fan (50) can be guided to the blade lower surface (23b) side of the lift fan (40) via the lower leading edge flow path (32). Accordingly, since it is possible to cover the blade lower surface (23b) side of the lift fan (40) by using a high-speed airflow from the thrust fan (50) without providing a structural cover, it is possible to further prevent the passage of air between the blade upper surface (23a) and the blade lower surface (23b) without increasing weight.

In addition, in the blade according to the aspect of the present disclosure, on the inside of the blade body (20), there is formed the trailing edge flow path (33) that causes the housing section (21) and the blade upper surface (23a) on the trailing edge (22b) side from the housing section (21) to communicate with each other.

In the blade according to the present aspect, since, on the inside of the blade body (20), there is formed the trailing edge flow path (33) that causes the housing section (21) and the blade upper surface (23a) on the trailing edge (22b) side from the housing section (21) to communicate with each other, the air can be guided from the housing section (21) to the blade upper surface (23a) on the trailing edge (22b) side from the housing section (21). Accordingly, the air guided to the housing section (21) can be efficiently drawn in, and the flow of air generated on the upper and lower surfaces of the lift fan (40) in the housing section (21) can smoothed. In addition, by guiding the air to the blade upper surface (23a), it is possible to suppress peeling on the trailing edge (22b) side of the blade body (20).

Further, in the blade according to the aspect of the present disclosure, a plurality of the housing sections (21) are formed at a plurality of locations along the chord direction, and a plurality of the lift fans (40) are provided corresponding to the plurality of housing sections (21).

In the blade according to the present aspect, since a plurality of housing sections (21) are formed at a plurality of locations along the chord direction, and a plurality of the lift fans (40) are provided corresponding to the plurality of housing sections (21), the thrust force during takeoff and landing generated by the lift fan (40) can be increased overall.

In addition, in the blade according to the aspect of the present disclosure, in the blade body (20), there are formed the upper intermediate flow path (34) that causes one of the housing sections (21) and another of the housing sections (21) to communicate with each other, and guides air from the one of the housing sections (21) to the blade upper surface (23a) side of the lift fan (40) housed in the other of the housing sections (21), and the lower intermediate flow path (35) that causes one of the housing sections (21) and another of the housing sections (21) to communicate with each other, and guides air from the one of the housing sections (21) to the blade lower surface (23b) side of the lift fan (40) housed in the other of the housing sections (21).

In the blade according to the present aspect, since, in the blade body (20), there are formed the upper intermediate flow path (34) that causes one of the housing sections (21) and another of the housing sections (21) to communicate with each other, and guides air from the one of the housing sections (21) to the blade upper surface (23a) side of the lift fan (40) housed in the other of the housing sections (21), and the lower intermediate flow path (35) that causes one of the housing sections (21) and another of the housing sections (21) to communicate with each other, and guides air from the one of the housing sections (21) to the blade lower surface (23b) side of the lift fan (40) housed in the other of the housing sections (21), the air from the one of the housing sections (21) can be guided to the blade upper surface (23a) side of the lift fan (40) via the upper intermediate flow path (34). Accordingly, since it is possible to cover the blade upper surface (23a) side of the lift fan (40) without providing a structural cover, it is possible to prevent the passage of air between the blade upper surface (23a) and the blade lower surface (23b) via the housing section (21) without increasing weight. Similarly, the air from the one of the housing sections (21) can be guided to the blade lower surface (23b) side of the lift fan (40) via the lower intermediate flow path (35). Accordingly, since it is possible to cover the blade lower surface (23b) side of the lift fan (40) without providing a structural cover, it is possible to prevent the passage of air between the blade upper surface (23a) and the blade lower surface (23b) without increasing weight.

In addition, in the blade according to the aspect of the present disclosure, the thrust fan (50) is a ducted fan.

In the blade according to the present aspect, since the thrust fan (50) is a ducted fan, an airflow having a higher speed can be generated on the downstream side of the thrust fan (50).

In addition, an aircraft according to another aspect of the present disclosure includes the above-described blade (10).

### Reference Signs List

- 1: Aircraft
- 10: Blade
- 20: Blade body
- 21: Housing section
- 22a: Leading edge
- 22b: Trailing edge
- 23a: Blade upper surface
- 23b: Blade lower surface
- 31: Upper leading edge flow path
- 31a: Inlet
- 31b: Outlet
- 32: Lower leading edge flow path
- 32a: Inlet
- 32b: Outlet
- 33: Trailing edge flow path
- 33a: Inlet
- 33b: Outlet
- 34: Upper intermediate flow path
- 34a: Inlet
- 34b: Outlet
- 35: Lower intermediate flow path
- 35a: Inlet
- 35b: Outlet
- 40: Lift fan
- 50: Thrust fan
- 51: Duct

## Claims

1. A blade comprising:
a blade body configured to include a housing section that penetrates in a blade thickness direction between a leading edge and a trailing edge;
a lift fan provided inside the housing section and configured to generate an airflow in the blade thickness direction; and
a thrust fan provided at the leading edge of the blade body and configured to generate an airflow from the leading edge toward the trailing edge on a blade upper surface and a blade lower surface of the blade body.

2. The blade according to claim 1, wherein
on the inside of the blade body, there are formed
an upper leading edge flow path that causes the leading edge provided with the thrust fan and the housing section to communicate with each other, and guides air to the blade upper surface side of the lift fan, and
a lower leading edge flow path that causes the leading edge provided with the thrust fan and the housing section to communicate with each other, and guides air to the blade lower surface side of the lift fan.

3. The blade according to claim 2, wherein
on the inside of the blade body, there is formed a trailing edge flow path that causes the housing section and the blade upper surface on the trailing edge side relative to the housing section to communicate with each other.

4. The blade according to any one of claims 1 to 3, wherein
a plurality of the housing sections are formed at a plurality of locations along a chord direction, and
a plurality of the lift fans are provided corresponding to the plurality of housing sections.

5. The blade according to claim 4, wherein
in the blade body, there are formed
an upper intermediate flow path that causes one of the housing sections and another of the housing sections to communicate with each other, and guides air from the one of the housing sections to the blade upper surface side of the lift fan housed in the other of the housing sections, and
a lower intermediate flow path that causes one of the housing sections and another of the housing sections to communicate with each other, and guides air from the one of the housing sections to the blade lower surface side of the lift fan housed in the other of the housing sections.

6. The blade according to any one of claims 1 to 5, wherein
the thrust fan is a ducted fan.

7. An aircraft comprising:
the blade according to any one of claims 1 to 6.
